# EUROPÄISCHE PATENTANMELDUNG

(11) **EP 2 100 794 A2**
(43) Veröffentlichungstag der Anmeldung: **16.09.2009**
(21) Anmeldenummer: 09003366.3
(22) Anmeldetag: 09.03.2009
(51) Int. Cl.: B62B 1/26, E01C 19/52, B62B 1/14

(54) **Handkarre zum Aufnehmen und Verlegen von Plattenelementen**

(30) Priorität: 12.03.2008 DE 102008013973
(71) Anmelder: Ody, Wolfgang, 21149 Hamburg (DE)
(72) Erfinder: Ody, Wolfgang, 21149 Hamburg (DE)
(74) Vertreter: Meyer, Ludgerus

(57) **Zusammenfassung**

Die Erfindung betrifft eine Handkarre zum Aufnehmen und Verlegen von Plattenelementen (33), wie Gehwegplatten oder dergleichen, mit einem mit zwei Rädern (4, 5) versehenen rahmenförmigen Fahrgestell und mit zwei Handgriffen (3) an einem oberen Ende eines rahmenförmigen Stützgestells sowie einer Greifvorrichtung zum seitlichen Erfassen und Festhalten eines Plattenelements (33), wobei die Greifvorrichtung Bestandteil des Fahrgestells ist, das Fahrgestell über eine Getenkverbindung (23, 24) mit dem Stützgestell gekoppelt ist und die Greifvorrichtung zwei parallele in der Rahmenebene des Fahrgestells seitlich bewegbare und feststellbare Klemmbacken (9, 10) aufweist. Erfindungsgemäß erfolgt die Arretierung der Klemmbacke (9. 10) mittels einer gripzangenförmigen Ktemmvorrichtung, welche mittels eines an dem Stützgestell befestigten Betätigungshebels (18) betätigbar ist. Stützgestell und Fahrgestell sind über eine Federverbindung (25, 26) miteinander verbunden, derart, dass im entlasteten Zustand der Federverbindung Stützgestell und Fahrgestell im Wesentlichen in parallelen Ebenen liegen.

## Beschreibung

Die Erfindung betrifft eine Handkarre zum Aufnehmen und Verlegen von Plattenelementen, wie Gehwegplatten oder dergleichen, nach dem Oberbegriff des Anspruchs 1.

Große Betonplatten, z. B. in der Größe 50 x 75 cm, wie sie für Gehwege und befestigte Flächen verwendet werden, sind schwer und entsprechend schwierig zu handhaben. In der Regel werden die zur Verlegung vorgesehenen Platten vertikal stehend an eine Baustelle geliefert und dann per Hand oder mittels einer Transportkarre zur Verlegestelle transportiert. Während für Großbaustellen der Einsatz von Hubfahrzeugen oder Saugglocken zum Anheben der Plattenelemente in Frage kommt, steht bei kleinen zu bearbeiteten Flächen Handarbeit im Vordergrund.

Bei der Handhabung von derartigen Ptattenelementen sind zwei Aufgabenstellungen zu unterscheiden. Zur Verlegung der Plattenelemente ist es erforderlich, die in der Regel vertikal aufgestellten Plattenelemente seitlich von einem Stapel abzunehmen, in die horizontale Position zu bringen und an der Verlegestelle abzulegen. Bei der Aufnahme von Plattenelementen aus einem freizulegenden Gelände sind die Platten dagegen in horizontaler Lage aufzunehmen und in horizontaler oder vertikaler Lage zu stapeln. Für diese beiden Aufgabenstellungen werden in der Regel unterschiedliche Hilfsmittel verwendet.

Aus der DE 28 26 483 A1 ist eine Verlegekarre zum Verlegen von Platten bekannt, welche ein auf Rädern fahrbares Gestell aufweist, das einen aufwärts- und abwärts bewegbaren mechanischen Greifer für die Plattenelemente enthält, wobei mindestens zwei relativ zueinander bewegliche beim Lastanheben selbsttätig schließende Greifbacken vorhanden sind. Die Greifbacken sind in der Lage, horizontal liegende Platten oder Stapel aufzunehmen, anzuheben und an eine andere Stelle zu transportieren. Eine Aufnahme vertikal stehender Plattenelemente ist mit dieser Vorrichtung weder vorgesehen hoch möglich.

Aus der EP 0 701 023 B1 ist eine Vorrichtung zum Transport und zum Verlegen plattenförmiger Elemente bekannt, bei der horizontal liegende Platten durch eine am unteren Ende der Vorrichtung angeordnete selbsttätiger Klemmeinrichtung aufnehmbar und an einen anderen Ort transportierbar sind. Auch diese Vorrichtung ist nicht zur Erfassung senkrecht stehender Plattenelemente geeignet oder vorgesehen.

Die in der DE 24 43 497 A1 angegebene Vorrichtung ist dagegen in der Lage, ein oder mehrere senkrecht stehende Plattenelemente durch seitliche Klemmbacken zu erfassen und an einen anderen Ort zu transportieren. Die Abgabe der Plattenelemente kann allerdings auch nur in vertikaler Stellung erfolgen, es sei denn, die freigegebenen Plattenelemente werden unkontrolliert fallengelassen.

Eine Handkarre zum Aufnehmen und Verlegen von Plattenelementen ist auch aus der DE 91 02 063 U1 bekannt. Diese Karre weist zwei Räder auf, die an einem Fahrgestell befestigt sind, das gelenkig mit einem H-förmigen Stützgestell verbunden ist. Das Fahrgestell enthält zwei Klemmbacken zur Aufnahme und Ablage der Plattenelemente, wobei das Lösen der Klemmbacken über eine Bowdenzuganordnung mit Griffbetätigung am Stützgestell erfolgt.

Diese Handkarre ist nur zum Aufnehmen und Ablegen horizontal angeordneter Plattenelemente geeignet, da die Klemmung der Klemmbacken über eine selbsttätig schließende Klemmverbindung erfolgt, die durch Gewichtskraft betätigt wird. Vertikal aufgestellte Plattenelemente können daher nicht aufgenommen werden.

Die in der GB 2 353 268 A angegebene Karre enthält neben einem Griff zum Verfahren der Karre einen Hebel zur Betätigung einer Klemmvorrichtung zur klemmenden Aufnahme von vertikal gelagerten Plattenelementen.

Die Klemmung der Klemmbacken erfolgt über manuelle Aufbringung einer Hebelkraft, die durch eine Druckfeder unterstützt wird. Beim Ablegen des Plattenelements muss die Klemmkraft manuell aufgehoben werden. Zum horizontalen Ablegen vertikal aufgenommener Plattenelemente muss die gesamte Karre um 90° gekippt werden.

Der Erfindung liegt die Aufgabe zugrunde, eine Handkarre zum Aufnehmen und Verlegen von Plattenelementen, wie Gehwegplatten oder dergleichen, anzugeben, welche in der Lage ist, auf einfache Weise vertikal stehende Plattenelemente aufzunehmen, zu transportieren und in kontrollierter Weise an einem Ablageort in horizontale Lage freizugeben.

Diese Aufgabe wird durch die im Anspruch 1 angegebene Erfindung gelöst. Vorteilhafte Weiterbildungen der Erfindung sind in Unteransprüchen angegeben.

Die Erfindung geht aus von einer Handkarre, welche zwei Räder an einem rahmenförmigen Fahrgestell und zwei Handgriffe am oberen Ende eines rahmenförmigen Stützgestells enthält. Es ist ferner eine Greifvorrichtung zum seitlichen Erfassen und Festhalten von Plattenelementen vorgesehen. Die Greifvorrichtung ist Bestandteil des Fahrgestells, das über eine Gelenkverbindung mit dem Stützgestell gekoppelt ist.

Erfindungsgemäß erfolgt die Arretierung der Klemmbacken mittels einer gripzangenförmigen Klemmvorrichtung, welche mittels eines an dem Stützgestell befestigten Betätigungshebels betätigbar ist. Das Stützgestell und das Fahrgestell sind über eine Federverbindung miteinander verbunden. Im entlasteten Zustand der Federverbindung liegen Stützgestell und Fahrgestell im Wesentlichen in parallelen Ebenen zueinander.

Die erfindungsgemäße Handkarre erlaubt es daher, das Stützgestell unabhängig von der Orientierung eines gehaltenen Plattenelements zu handhaben, wobei das Plattenelement ausschließlich von der Greifvorrichtung gehalten ist, die Teil des Fahrgestells ist. Das Fahrgestell kann über die Gelenkverbindung gegenüber dem Stützgestell geschwenkt werden, so dass damit die Orientierung eines aufgenommenen Plattenelements geändert werden kann. Insbesondere ist es damit möglich, die Plattenelemente in vertikaler Stellung aufzunehmen, mittels der Räder des Fahrgestelis zu einer Ablagestelle zu transportieren und dort durch Kippen des Fahrgestells gegenüber dem Stützgestell in eine horizontale Position zu bringen und dann kontrolliert freizugeben. In der Abgabeposition stehen Stützgestell und Fahrgestell etwa in einem 90°-Winkel zueinander.

Da die Greifvorrichtung zwei parallele in der Rahmenebene des Fahrgestells seitlich bewegbare und feststellbare Klemmbacken aufweist, können die Klemmbacken insbesondere synchron zueinander zusammen- oder auseinanderbewegt werden, wobei die Führung der Klemmbacken insbesondere teleskopisch erfolgt. Die teleskopische Ineinanderführung vermeidet ein Verkanten der Klemmbacken und sichert eine parallele Aufnahme der in der Regel rechteckigen oder quadratischen Plattenelemente.

Zur Klemmung der Klemmbacken ist vorzugsweise eine gripzangenförmige Kniehebeleinrichtung vorgesehen, die stabil hohe Kräfte auf die Klemmbacken aufbringen kann. Eine bevorzugte Ausgestaltung der Kniehebelverbindung besteht darin, die Mechanik einer handelsüblichen Gripzange zu verwenden, deren eines Zangenteil auf die eine der Klemmbacken und deren anderes Zangenteil auf die andere der Klemmbacken einwirkt. Die Betätigung der Gripzange erfolgt insbesondere mittels eines am Stützgestell befestigten Betätigungshebels. Damit lässt sich eine Betätigung der Klemmvorrichtung unabhängig von der Kippstellung des Fahrgestells vornehmen.

Die Räder des Fahrgestells sind vorzugsweise am unteren Ende (bei vertikaler Stellung) auf der der Greifvorrichtung gegenüberliegenden Rückseite des Fahrgestells befestigt. Die Räder sind dabei insbesondere so angeordnet, dass die Handkarre nach Art einer Sackkarre mit einem aufgenommenen Plattenelement nach hinten zum Benutzer hin gekippt werden kann, so dass das Plattenelement und die verwendete Greifvorrichtung vom Boden abgehoben werden und die Handkarre über die Räder transportierbar ist. Andererseits sind die Räder gegenüber der Rahmenebene des Fahrgestells soweit zurückversetzt, dass bei horizontal liegendem Fahrgestell die Laufflächen der Räder nicht die Ablage der Plattenelemente behindern.

Zur Erhöhung der Sicherheit der Handkarre in der Transportstellung, d. h. der Stellung, in der die Ebene des Fahrgestells parallel zur Ebene des Stützgestells verläuft, können Stützgestell und Fahrgestell miteinander verriegelt werden. Die Verriegelung kann mittels eines Verriegelungsbolzens erfolgen, der über einen am Stützgestell angeordneten Hebel betätigbar ist.

Die Handkarre weist zwischen Stützgestell und Fahrgestell eine Federverbindung auf, der Art, dass im entlasteten Zustand der Federverbindung Stützgestell und Fahrgestell im Wesentlichen in parallelen Ebenen zueinander liegen. Die Federverbindung ist so stark gewählt, dass bei der Handhabung von standardisierten Plattenelemente bestimmter Größe das Kippen des Fahrgestells gegenüber dem Stützgestells weitgehend so ausgeführt werden kann, dass ein unkontrolliertes Abkippen des Plattenelementes verhindert wird. Zur Verhinderung eines unkontrollierten Zurückspringens des Fahrgestells gegenüber dem Stützgsstell aufgrund der Federverbindung nach Ablage eines Plattenelements kann zwischen Stützgestell und Fahrgestell noch ein Gasdruckelement eingeschaltet werden, das die Rückdrehung des Fahrgestells gegenüber dem Stützgestell nach Ablage eines Plattenelementes abdämpft.

In einer weiteren Ausbildungsform kann vorgesehen sein, dass das Stützgestell eine zweite Klemmvorrichtung aufweist, deren Wirkungsebene in einer Ebene vor einem aufgenommenen Plattenelement liegt. Diese zweite Klemmvorrichtung ist scherenförmig ausgebildet und erlaubt eine hängende Aufnahme eines weiteren Plattenelements. Damit ist es möglich, gleichzeitig zwei Plattenelemente aufzunehmen und zu transportieren. An der Ablagestelle wird dabei zunächst die über die zweite Klemmvorrichtung gehaltene Platte freigegeben und z. B. in vertikaler Stellung temporär aufgestellt. Danach kann auf die beschriebene Weise das erste Plattenelement kontrolliert abgelegt werden. Das zuvor vertikal abgestellte Plattenelement kann dann bei Bedarf ebenfalls mit der erfindungsgemäßen Handkarre wieder aufgenommen werden und ebenfalls kontrolliert abgelegt werden. Bei Verwendung der zweiten Klemmvorrichtung können somit Transportwege eingespart werden.

Die zweite Klemmvorrichtung lässt sich vorzugsweise mittels eines am Stützgestell angeordneten vertikal betätigbaren Lösehebels freigeben. Die Freigabe erfolgt damit unabhängig von der Freigabe des ersten Plattenelements, wobei jedoch eine Freigabe des ersten Plattenelements nicht erfolgen kann, bevor das zweite Plattenelement abgegeben ist.

Das untere Ende der Handkarre weist in vertikaler Ausrichtung betrachtet vorzugsweise zwei untere am hinteren bzw. unterem Ende des Fahrgestells angeordnete voneinander beabstandete Stützelemente auf, über die das Abklappen des Fahrgestells zur Ablage eines Plattenelements erfolgt. Bei vertikaler Stellung des Plattenelements befinden sich die Stützelemente im Wesentlichen unmittelbar unterhalb der unteren Kante des Plattenelements, so dass eine definierte Kippkante gebildet ist, über die das Plattenelement abgelegt wird. In einer weiteren bevorzugten Ausgestaltung können die Stützelemente kufenförmig ausgebildet sein, wobei die Erstreckung der Stützelemente senkrecht zur Rahmenebene des Fahrgestells wenigstens der Dicke eines Plattenelements entspricht. Dies hat den besonderen Vorteil, dass das Kippen des Plattenelements somit über die vordere, untere Kante des Plattenelements erfolgen kann und damit beim Ablegen des Plattenelements eine horizontale Stellung erreichbar ist, bevor das Plattenelement an dem gewünschten Ablageort freigegeben wird. Damit lässt sich eine hochpräzise Ablage von Plattenelementen erreichen.

Schließlich kann vorgesehen sein, dass das Fahrgestell auch in einer um 90° gegenüber dem Stützgestell abgekippten Stellung mit dem Stützgestell verriegelbar ist, so dass trotz vorhandener Rückstellkraft über die Federelemente zwischen Fahrgestell und Stützgestell eine einfache Aufnahme von horizontal liegenden Plattenelemente möglich wird. Dadurch kann die Handkarre nicht nur zum Ablegen von Plattenelementen verwendet werden, sondern auch zur Aufnahme bereits verlegter Elemente oder horizontal liegender Platten.

Die erfindungsgemäße Handkarre erleichtert die Verlegearbeit von Plattenelementen auf einer Baustelle erheblich. Sie ist rückenschonend und vermeidet Verteilungen. Sie ist einfach aufgebaut, erfordert keine Hilfsenergie und ist flexibel einsetzbar.

Die Erfindung wird nachstehend anhand eines Ausführungsbeispiels näher erläutert.

Es zeigen:
- Fig. 1: eine Vorderansicht einer Handkarre nach der Erfindung.
- Fig. 2: eine Seitenansicht.
- Fig. 3: eine Rückansicht des Fahrgestells.
- Fig. 4: eine Darstellung der Kolben-Zylinderbetätigung.
- Fig. 5: eine Ansicht der zusätzlichen Greifvorrichtung, und
- Fig. 6a, b: zwei seitliche Schnitte der zusätzlichen Greifvorrichtung.

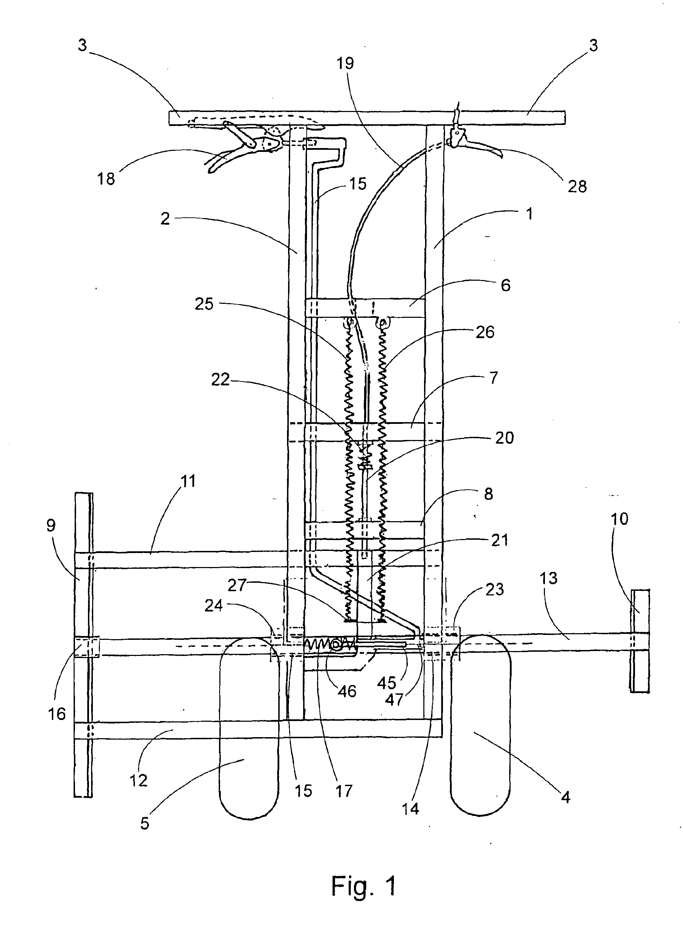

Die in Fig. 1 dargestellte Handkarre weist ein rahmen- oder leiterförmiges Stützgestell auf, das zwei seitliche Holme 1 und 2 enthält, die über Querstreben 6, 7 und 8 miteinander verbunden sind. Am oberen Ende der Holme 1 und 2 sind zwei Handgriffe 3 ausgebildet, die als Querstange realisiert sind. Die die Handgriffe 3 bildenden Enden der Querstange können ggf. mit einer weichen oder gummierten Tülle versehen sein, um die Bequemlichkeit der Handhabung zu verbessern.

Das Stützgestell ist am unteren Ende über Lager 23 und 24 gelenkig mit einem Fahrgestell verbunden, das übenfalls rahmenartig ausgebildet ist. Die Lager 23 und 24 befinden sich dabei im mittleren Bereich der Längserstreckung des Fahrgestells. Seitlich zurückversetzt am hinteren bzw. unteren Ende des Fahrgestells befinden sich zwei Laufräder 4 und 5. An der in Vertikalstellung betrachteten Vorderseite des Fahrgestells befindet sich eine Greifvorrichtung, die zwei seitliche Klemmbacken 9 und 10 enthält, die teleskopisch gegeneinander bewegbar sind. Die Klemmbacke 9 ist über rechtwinklig daran befestigte Greiferrohre 11 und 12 mit dem Fahrgestell fest verbunden. Zwischen den Greiferrohren 11 und 12 befindet sich ein weiteres Greiferrohr 13, das durch die Führungen 14 und 15 am Fahrgestell geführt ist und bis zur Klammbacke 9 verläuft und dort in der Aufnahme 16 verschieblich gelagert ist. Auf der der Aufnahme 16 gegenüberliegenden Seite enthält das Greiferrohr 13 die Klemmbacke 10. Durch Verschieben des Greiferrohrs 13 in den Führungen 14 und 15 lässt sich damit der Abstand der Klemmbacken 9 und 10 verändern.

Die Betätigung der Verschiebung erfolgt über eine Kolbenzylinderbetätigung, wobei ein Koiben 45 mittels Bolzen 46 an dem Greiferrohr 13 befestigt ist, und das andere Ende des Kolbens 45 in einem Zylinderraum eines Zylinders 47 gelagert ist der an der Greiferführung 14 befestigt ist. Das an dem Greiferrohr 13 befestigte Ende des Kolbens 45 steht ferner über eine Pufferfeder 17 gegenüber der Führung 15 unter Vorspannung, um nach Aufhebung der Klemmung der Klemmbacken 9 und 10 eine Rückstellkraft auf die Greiferführung 13 aufbringen zu können.

Der Zylinderraum des Zylinders 47 steht über eine bewegliche und die Drehung von Fahrgestell und Stützgestell berücksichtigende Druckleitung 48 in Verbindung mit einem Betätigungshebel 18, der sich am Handgriff 3 befindet. Indem über den Betätigungshebel 18 hydraulischer Druck auf den Kolben 45 ausgeübt wird, werden die Klemmbacken 9 und 10 zueinander bewegt und üben damit bei aufgenommenem Plattenelement Kraft auf die Seitenkanten des Plattenelements aus. Das Plattenelement lässt sich damit über hohe Klemmkraft halten.

Die Aufbringung einer ausreichenden hydraulischen Kraft erfolgt über eine Kniehebelverbindung, die in diesem Ausführungsbeispiel durch eine Gripzange aufgebracht wird, die auf einen Betätigungskolben einwirkt, der sich am Handgriff 3 befindet.

Anstelle einer hydraulischen Kraftaufbringung kann auch eine Bowdenzugkraftübertragung erfolgen, wobei jedoch in diesem Fall bevorzugt wird, die Kniehebelverbindung unmittelbar zwischen den Klemmbacken 9 und 10 anzubringen, um die Stabilität der Kraftaufbringung zu verbessern. Die Betätigung der verwendeten Kniehebelmechanik erfolgt dabei über Bowdenzüge von an dem Handgriff 3 angeordneter Betätigungshebel.

Fig. 1 zeigt ferner zwei Federn 25 und 26, die von der oberen Querstrebe 6 ausgehend, hinter der Querstrebe 8 entlang geführt, bis zum Federlager 27 gespannt sind, welches sich am Fahrgestell befindet. Damit lässt sich das Fahrgestell in eine Stellung vorspannen, in der die Ebene des Fahrgestells parallel zur Ebene des Stützgestells verläuft. Wenn das Fahrgestell gegenüber dem Stützgestell gekippt wird, verlängert sich der Weg zwischen Querstrebe 8, hinter der die Federn verlaufen, und dem Federlager 27 auf dem Fahrgestell, so dass die Federn stark gespannt werden.

Um in einer parallelen Ausrichtung von Fahrgestell und Stützgestell eine Verriegelung von Fahrgestell und Stützgestell zueinander zu erzielen, ist an dem Stützgestell ein Verriegelungsbolzen 20 befestigt, der in eine Aufnahme 21 des Fahrgestells eingreifen kann. Die Betätigung des Bolzens 20 erfolgt über einen Bowdenzug 19 und einen Hebel 28, wobei eine Rückstellung des Bolzens 20 über eine Feder 22 erreichbar ist.

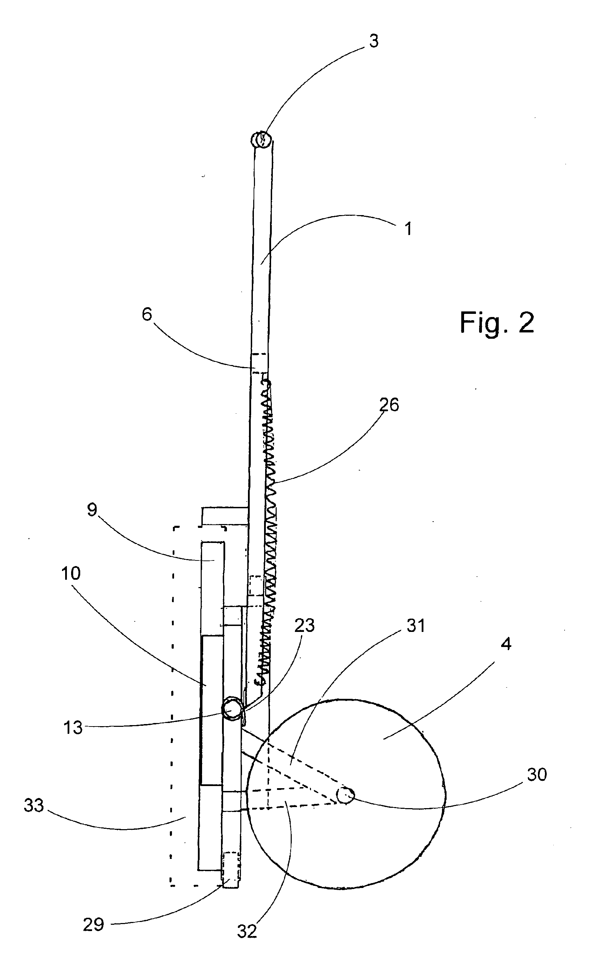

Fig. 2 zeigt die Handkarre in Seitenansicht. Das Rad 4 ist über Streben 31 und 32 mit dem Fahrgestell verbunden und über eine Achse 30 mit dem gegenüberliegenden nicht dargestellten Rad 5 gekoppelt.

Die Figur zeigt deutlich das Lager 23, das der Verbindung zwischen Fahrgestell und dem unteren Ende des Stützgestells dient. Ferner ist die Feder 26 gezeigt, die zwischen Fahrgestell und Stützgestell ausgebildet ist.

Es ist auch dargestellt, dass das Fahrgestell eine untere Kufe 29 aufweist, über die die Abstützung des Fahrgestells auf dem Boden erreichbar ist. Die Kufe kann ggf. einen zur Vorderseite des Plattenelements 33 weisenden Ansatz aufweisen, wodurch beim Abkippen des Plattenelements eine bessere Ablagestellung erreichbar ist. Allerdings kann ein entsprechender Ansatz die Aufnahme eines Plattenelements aus senkrechter Stellung behindern, so dass ein solcher Ansatz nur dann sinnvoll ist, wenn Plattenelemente auch von der Unterseite her aufnehmbar sind. z. B. wenn sie auf einer Palette stehen.

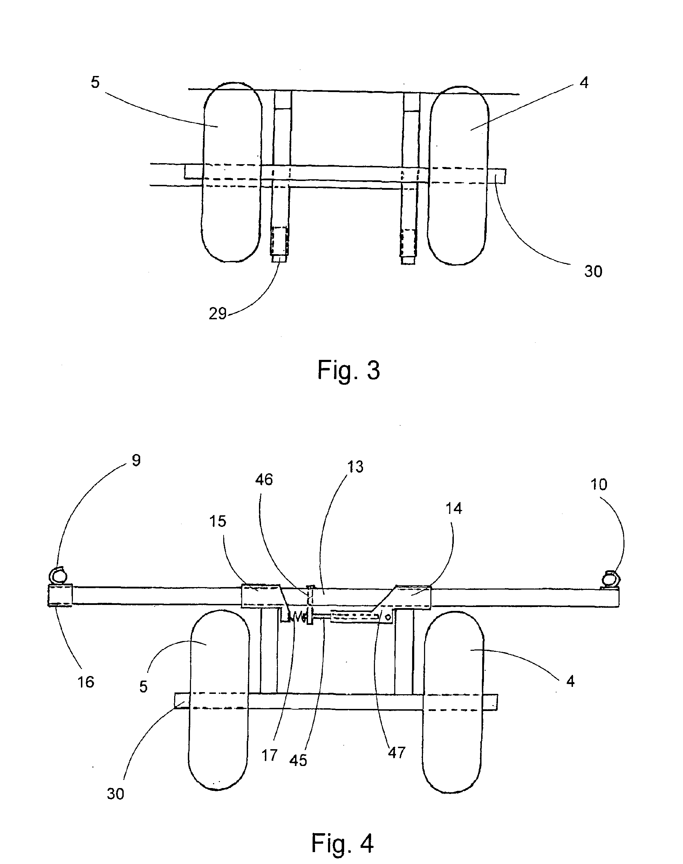

Fig. 3 zeigt eine Teilansicht des Fahrgestells mit Kufenelementen 29, Räder 4 und 5 und Achse 30.

Fig. 4 zeigt eine Verdeutlichung der Kolbenbetätigung. Das in den Führungen 14 und 15 geführte Greiferrohr 13 ist über den Bolzen 46 mit dem Kolben 45 verbunden, der einerseits in den Zylinder 47 hereinragt und der andererseits mit einer Feder 17 verbunden ist, die gegen einen Ansatz der Führung 15 drückt.

Der Zylinder 47 ist an einem Ansatz der Führung 14 befestigt. Bei Aufbringen eines hydraulischen Drucks auf den Zylinder wird der Kolben 45 herausgedrückt und verschiebt damit über den Bolzen 46 die Greiferführung 13 und damit die Klemmbacke 10 nach links. Nach Aufhebung des hydraulischen Drucks erfolgt die Rückstellung der Greiferführung über die Feder 17.

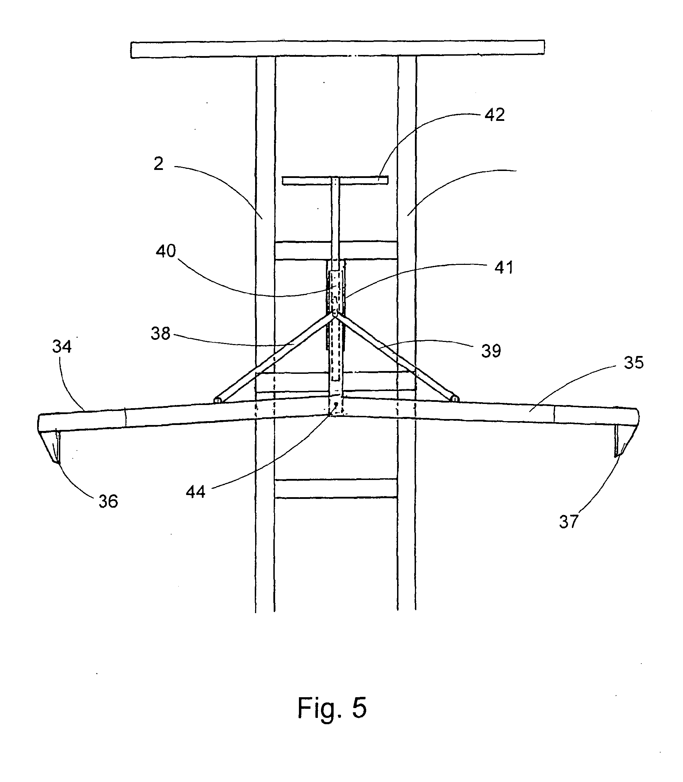

Fig. 5 zeigt eine Ergänzung der Handkarre, die eine zusätzliche Greifvorrichtung darstellt. Diese besteht aus zwei Greiferetementen 34 und 35, die über das Gelenk 44 miteinander am Stützgestell gelenkig befestigt sind und in einem Abstand vom Gelenk 44 über Streben 38 und 39 an einer Zugstange 40 befestigt sind. Die Zugstange ist in einer Führung 41 am Stützgestell gelagert und weist an ihrem oberen Ende einen Betätigungsgriff 42 auf. An den Außenenden der Greiferelemente 34 und 35 sind Klemmbacken 36 und 37 angeordnet.

Die zusätzliche Greifvorrichtung arbeitet wie folgt. Im Ausgangszustand verlaufen die Greiferelemente 34 und 35 annähernd in einer horizontalen Richtung. Durch Herunterdrücken des Betätigungsgriffs 42 drückt die Zugstange 40 über die Streben 38 und 39 die Greiferelemente 34 und 35 an ihren äußeren Enden herunter. Damit können die Klemmbacken 36 und 37 ein Plattenelement erfassen. Beim Anheben bzw. Nachhinterikippen des Stützgestells erhöhen die Klemmbacken 36 und 37 selbsttätig ihre Kraft auf das Plattenelement, da die inneren Enden der Greiferelemente 34 und 35 über das Lager 44 fest mit dem Stützgestell verbunden sind.

Nach Abstellen des aufgenommenen Plattenelements kann durch Zlehen des Betätigungsgriffs 42 die Klemmung der Klemmbacken 36 und 37 wieder gelöst werden.

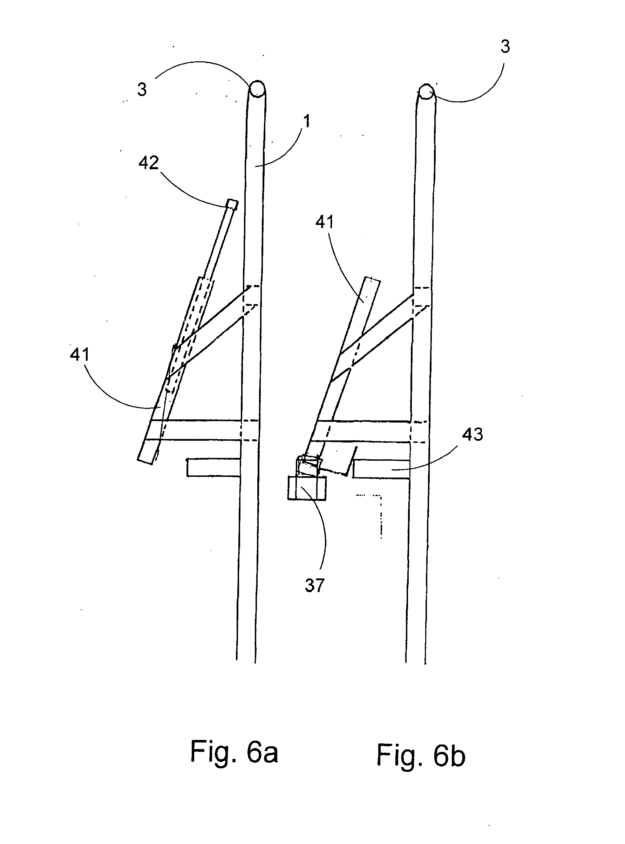

Die Figuren 6a und 6b zeigen die zusätzliche Klemmvorrichtung in Fig. 5a in einer vertikalen Schnittansicht entlang der Mittellinie des Stützgestells, während Fig. 5b eine Seitenansicht der zusätzlichen Greifvorrichtung zeigt. Es ist gezeigt, dass die Greifvorrichtung sich vor einer Stütze 43 befindet, die die maximale Höhe definiert, die durch das erste Plattenelement eingenommen werden kann. Die Klemmbacke 37 klemmt ein Plattenelement daher in einer zum ersten Plattenelemente parallelen Ebene, so dass zwei Plattenelemente von der Handkarre gleichzeitig aufgenommen und transportiert werden können.

Vorgenannte in einem Ausführungsbeispiel dargestellte Funktionselemente können auch in anderer Gestaltungsform verwendet werden, ohne dass die durch die nachstehenden Ansprüche definierte Erfindung verlassen wird.

### Bezugszeichen

- 1: Holm
- 2: Holm
- 3: Handgriff
- 4: Rad
- 5: Rad
- 6: Querstrebe
- 7: Querstrebe
- 8: Querstrebe
- 9: Klemmbacke
- 10: Klemmbacke
- 11: Greiferrohr
- 12: Greiferrohr
- 13: Greiferrohr
- 14: Führung
- 15: Führung
- 16: Aufnahme
- 17: Feder
- 18: Betätigungshebel
- 19: Bowdenzug
- 20: Bolzen
- 21: Aufnahme
- 22: Feder
- 23: Lager
- 24: Lager
- 25: Feder
- 26: Feder
- 27: Federlager
- 28: Hebel
- 29: Kufe
- 30: Achse
- 31: Strebe
- 32: Strebe
- 33: Plattenelement
- 34: Greiferelement
- 35: Greiferelement
- 36: Klemmbacke
- 37: Klemmbacke
- 38: Strebe
- 39: Strebe
- 40: Zugstange
- 41: Führung
- 42: Betätigungsgriff
- 43: Stütze
- 44: Gelenk
- 45: Kolben
- 46: Bolzen
- 47: Zylinder
- 48: Druckleitung

## Patentansprüche

1. Handkarre zum Aufnehmen und Verlegen von Plattenelementen (33), wie Gehwegplatten oder dergleichen, mit einem mit zwei Rädern (4, 5) versehenen rahmenförmigen Fahrgestell und mit zwei Handgriffen (3) an einem oberen Ende eines rahmenförmigen Stützgestells sowie einer Greifvorrichtung zum seitlichen Erfassen und Festhalten eines Plattenelements (33), wobei die Greifvorrichtung Bestandteil des Fahrgestells ist, das Fahrgestell über eine Gelenkverbindung (23, 24) mit dem Stützgestell gekoppelt ist, und die Greifvorrichtung zwei parallele in der Rahmenebene des Fahrgestells seitlich bewegbare und feststellbare Klemmbacken (9, 10) aufweist, **dadurch gekennzeichnet, dass** die Arretierung der Klemmbacken (9, 10) mittels einer gripzangenförmigen Klemmvorrichtung erfolgt, welche mittels eines an dem Stützgestell befestigten Betätigungshebels (18) betätigbar ist, und dass Stützgestell und Fahrgestell über eine Federverbindung (25, 26) miteinander verbunden sind, derart, dass im entlasteten Zustand der Federverbindung Stützgestell und Fahrgestell im Wesentlichen in parallelen Ebenen liegen.

2. Handkarre nach Anspruch 1, **dadurch gekennzeichnet, dass** die Klemmvorrichtung mittels einer Bowdenzugbetätitgung auf die Klemmbacken einwirkt.

3. Handkarre nach Anspruch 1, **dadurch gekennzeichnet, dass** die Klemmvorrichtung mittels hydraulischer Kraftübertragung betätigbar ist.

4. Handkarre nach Anspruch 1, **dadurch gekennzeichnet, dass** wenigstens eine der Klemmbacken (9, 10) in einer Führung (14, 15) des Fahrgestells bewegbar ist.

5. Handkarre nach Anspruch 1, **dadurch gekennzeichnet, dass** die Räder (4, 5) des Fahrgestells auf der der Greifvorrichtung gegenüberliegenden Rückseite des Fahrgestells an dessen unterem Ende befestigt sind.

6. Handkarre nach Anspruch 1, **dadurch gekennzeichnet, dass** das untere Ende des Stützgestells im mittleren Bereich der Längserstreckung des Fahrgestells gelagert ist.

7. Handkarre nach Anspruch 1, **dadurch gekennzeichnet, dass** in einer ersten Stellung, in der die Rahmenebene des Fahrgestells im Wesentlich parallel zur Rahmenebene des Stützgestells liegt, Fahrgestell und Stützgestell miteinander verriegelbar sind.

8. Handkarre nach Anspruch 7, **dadurch gekennzeichnet, dass** die Ent- und Verriegelung von Fahrgestell und Stützgestell mittels eines Verriegelungsbolzens (20) erfolgt, der über einen am Stützgestell angeordneten Hebel (28) betätigbar ist.

9. Handkarre nach einem oder mehreren der vorhergehenden Ansprüche, **dadurch gekennzeichnet, dass** am Stützgestell eine zweite scherenförmig wirkende Klemmvorrichtung zur hängenden Aufnahme eines weiteren Plattenelements befestigt ist.

10. Handkarre nach Anspruch 9, **dadurch gekennzeichnet, dass** die zweite Klemmvorrichtung mittels eines an dem Stützgestell angeordneten vertikal betätigbaren Lösehebels (42) freigebbar ist.

11. Handkarre nach Anspruch 1, **dadurch gekennzeichnet, dass** das Fahrgestell in vertikaler Ausrichtung betrachtet zwei untere voneinander beabstandete Stützelemente (29) aufweist, über die das Abkippen des Fahrgestells zur Ablage eines Plattenelements erfolgen kann.

12. Handkarre nach Anspruch 11, **dadurch gekennzeichnet, dass** die Stützelemente (29) kufenförmig ausgebildet sind, wobei die Erstreckung der Stützelemente senkrecht zur Rahmenebene wenigstens der Dicke eines Plattenelements entspricht.

13. Handkarre nach Anspruch 1, **dadurch gekennzeichnet, dass** das Fahrgestell und das Stützgestell über einen Gasdruckdämpfer gekoppelt sind.

14. Handkarre nach Anspruch 8, **dadurch gekennzeichnet, dass** das Fahrgestell und das Stützgestell in einer Winkelstellung miteinander verriegelbar sind.

15. Handkarre nach Anspruch 14, **dadurch gekennzeichnet, dass** die Winkelstellung 90 - 130° beträgt.
